# EUROPEAN PATENT APPLICATION

(11) **EP 3 820 098 A1**
(43) Date of publication of application: **12.05.2021**
(21) Application number: 18925499.8
(22) Date of filing: 06.07.2018
(51) Int. Cl.: H04L 27/26, H04W 72/04, H04W 76/15

(54) **USER TERMINAL**

(71) Applicant: NTT DoCoMo, Inc., Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/025788
(87) International publication number: WO 2020/008648

(57) **Abstract**

To appropriately perform activation/deactivation control that uses at least downlink control information, one aspect of a user terminal according to the present disclosure includes a reception section that receives a first control signal and a second control signal for instructing activation or deactivation of a cell, and a control section that activates or deactivates a given cell by using only one of the first control signal and the second control signal or both of the first control signal and the second control signal.

## Description

### Technical Field

The present disclosure relates to a user terminal of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-A (LTE-Advanced, LTE Rel. 10 to 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

According to Carrier Aggregation (CA) of legacy LTE (e.g., LTE Rel. 13 or prior releases), a base station performs control that uses a Medium Access Control Control Element (MAC Control Element (MAC CE)) to activate a Secondary Cell (SCell) from a deactivated state for a user terminal (UE: User Equipment).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

According to legacy LTE, activation of the SCell that uses the MAC control element requires several tens of ms. A future radio communication system (e.g., NR) is requested to control quicker activation/deactivation of the SCell. It is thought to use downlink control information to quickly control activation/deactivation of the SCell.

However, how to perform control when activation/deactivation of the SCell is controlled by using downlink control information matters. However, for example, a specific operation is not sufficiently studied. When activation/deactivation is not appropriately controlled, there is a risk that a throughput lowers or communication quality deteriorates.

It is therefore one of objects of the present disclosure to provide a user terminal that can appropriately perform activation/deactivation control that uses at least downlink control information.

### Solution to Problem

A user terminal according to one aspect of the present disclosure includes a reception section that receives a first control signal and a second control signal for instructing activation or deactivation of a cell, and a control section that activates or deactivates a given cell by using only one of the first control signal and the second control signal or both of the first control signal and the second control signal.

### Advantageous Effects of Invention

According to one aspect of the present disclosure, it is possible to appropriately perform activation/deactivation control that uses at least downlink control information.

### Brief Description of Drawings

Fig. 1 is a diagram illustrating one example of activation/deactivation that uses DCI.
Fig. 2 is a diagram illustrating another example of activation/deactivation that uses DCI.
Fig. 3 is a diagram illustrating one example of activation/deactivation that uses a timer.
Fig. 4 is a diagram illustrating one example of activation/deactivation that uses an MAC control element and DCI.
Fig. 5 is a diagram illustrating another example of activation/deactivation that uses the MAC control element and the DCI.
Fig. 6 is a diagram illustrating another example of activation/deactivation that uses the MAC control element and the DCI.
Fig. 7 is a diagram illustrating one example of activation/deactivation that uses a plurality of pieces of DCI.
Fig. 8 is a diagram illustrating another example of activation/deactivation that uses a plurality of pieces of DCI.
Fig. 9 is a diagram illustrating another example of activation/deactivation that uses a plurality of pieces of DCI.
Fig. 10 is a diagram illustrating one example of a schematic configuration of a radio communication system according to the present embodiment.
Fig. 11 is a diagram illustrating one example of an overall configuration of a radio base station according to the present embodiment.
Fig. 12 is a diagram illustrating one example of a function configuration of the radio base station according to the present embodiment.
Fig. 13 is a diagram illustrating one example of an overall configuration of a user terminal according to the present embodiment.
Fig. 14 is a diagram illustrating one example of a function configuration of the user terminal according to the present embodiment.
Fig. 15 is a diagram illustrating one example of hardware configurations of the radio base station and the user terminal according to the present embodiment.

### Description of Embodiments

According to Carrier Aggregation (CA) of legacy LTE (e.g., LTE Rel. 13), a signaling (Activation/Deactivation MAC CE) that uses a Medium Access Control Control Element (MAC Control Element (MAC CE)) is used to activate an SCell from a deactivated state. The MAC CE includes information related to whether or not each SCell needs to be activated.

In this regard, in a deactivated cell, for example, a UE does not monitor a downlink control channel (e.g., Physical Downlink Control Channel (PDCCH)), or does not transmit an uplink control channel (PUCCH: Physical Uplink Control Channel). That is, the UE performs a less operation than an operation in an active cell.

The UE that has received an activation MAC CE in a certain subframe (subframe n) needs to transmit a valid CSI reporting by a subframe n+24 or n+34. In this regard, the valid CSI corresponds to a CQI value other than a CQI index = 0 (associated with an Out Of Range (OOR)) obtained based on measurement by the UE.

As described above, according to legacy LTE, activation of the SCell requires several tens of ms. It is demanded that a future radio communication system (e.g., at least one of NR, 5G and 5G+ that is also referred to simply as NR below) more quickly controls activation/deactivation of SCells. There are problems that, unless a method for appropriately performing this control is established, such as a throughput lowers.

The inventors of the present invention have focused on that it is possible to use a dynamic signaling (e.g., downlink control information) to control activation/deactivation of SCells at a high speed. On the other hand, how to perform control becomes problem when a cell is activated/deactivated by using Downlink Control Information (also referred to as DCI below), including the relationship with the control that uses an MAC control element (or an MAC control signal), too.

Hence, the inventors of the present invention have conceived a method for controlling activation/deactivation of a given cell when activation/deactivation control of a cell that uses a plurality of control signals (e.g., a first control signal and a second control signal) is supported.

An embodiment according to the present disclosure will be described in detail below with reference to the drawings. Each embodiment may be each applied alone or may be applied in combination.

Furthermore, in this description, a term "activation/deactivation" means at least one of activation and deactivation. That is, "activation/deactivation" may be read as "activation", "deactivation" or "activation and deactivation".

Furthermore, activation/deactivation that uses DCI may be referred to as DCI-based activation/deactivation, and activation/deactivation that uses an MAC control element may be referred to as MAC-based activation/deactivation.

The following description will cite an MAC control element (e.g., first control signal) and DCI (e.g., second control signal) as an example of a downlink control signal (or a downlink signaling) for instructing activation/deactivation of a cell. However, types and the number of applicable control signals in the present embodiment are not limited to these.

### (First Aspect)

According to the first aspect, activation/deactivation of a given cell is controlled by using at least one of a first control signal (e.g., MAC control element) and a second control signal (e.g., DCI). In the following description, a cell may be read as at least one of an SCell, a CC, a Cell Group (CG) and a PUCCH group.

A UE controls activation/deactivation of the given cell by using only one of the MAC control element and the DCI or by using both of the MAC control element and the DCI.

A base station may instruct the UE to monitor the DCI for instructing activation/deactivation of a cell. For example, a cell that monitors the DCI for instructing activation/deactivation of the given cell may be configured to the UE by a higher layer (e.g., RRC signaling).

The base station may configure a cell that transmits DCI for instructing activation/deactivation of each cell (or a cell in which the UE monitors the DCI) to the UE per cell configured to the UE.

A cell that transmits DCI for instructing activation/deactivation of other cells may be at least one of a primary cell, a PSCell, a PUCCH SCell and an SCell.

The base station may configure a type of the control signal used to instruct activation/deactivation to a cell whose activation/deactivation is instructed to notify the UE.

### <Option 1>

According to the option 1, the only one control signal used to instruct activation/deactivation is configured to the cell whose activation/deactivation is instructed. That is, only one of an MAC control element and DCI is configured as the control signal for instructing activation/deactivation to each cell (or a given cell).

The base station may notify the UE of information related to the control signal used to instruct activation/deactivation of the given cell by using, for example, a higher layer signaling. A signaling for configuring the information related to the control signal used to instruct activation/deactivation of the given cell may be individually configured per cell, may be configured at once per Cell Group (CG), or may be configured at once per PUCCH group (PUCCH-group). The UE can grasp the type of the control signal used to control activation/deactivation of the given cell based on the information from the base station.

For example, the UE assumes a case where the MAC control element is configured (the DCI is not configured) as a control signal for activation/deactivation of a cell #X. In this case, the UE may control reception processing assuming that the DCI for activation/deactivation of the cell #X is not transmitted. For example, the UE may perform control not to monitor the DCI (or a PDCCH) for activation/deactivation, or the UE may perform control assuming that the DCI (or the PDCCH) for activation/deactivation is not detected, and perform control not to activate/deactivate the cell #X even if the DCI for activation/deactivation is detected.

The base station may configure one of the control signals to all cells of cells configured to the UE, or may configure one of the control signals to part of the cells. When, for example, the MAC control element is configured for activation/deactivation of the cell #X of the UE, the base station may perform control not to transmit the DCI for activation/deactivation to the cell #X of the UE. Alternatively, when the DCI is configured for activation/deactivation of the cell #X of the UE, the base station may perform control not to instruct activation/deactivation that uses the MAC control element for activation/deactivation to the cell #X of the UE.

### <Option 2>

According to the option 2, two (two types) of control signals used to instruct activation/deactivation at maximum are configured to a cell to be activated/deactivated. That is, each cell (or the given cell) supports both of the MAC control element and the DCI (or one or both of the MAC control element and the DCI are configured) as control signals for instructing activation/deactivation. When one of the MAC control element and the DCI is configured as the control signal used to instruct activation/deactivation, the UE monitors the DCI (or a PDCCH) for activation/deactivation, and, at the same time, ascertains and controls the instruction of activation/deactivation that uses the MAC control element.

The base station may notify the UE of information related to the control signal used to instruct activation/deactivation of the given cell by using, for example, a higher layer signaling. Furthermore, the base station may configure both of the control signals to all cells of cells configured to the UE, or may configure both of the control signals to part of the cells. A signaling for configuring the information related to the control signal used to instruct activation/deactivation of the given cell may be individually configured per cell, may be configured at once per Cell Group (CG), or may be configured at once per PUCCH group (PUCCH-group).

For example, the base station may configure one of the MAC control element and the DCI as the control signal for activation/deactivation of the cell #X, and configure both of the control signals of the MAC control element and the DCI as control signals for activation/deactivation of a cell #Y.

### <Option 3>

According to the option 3, a type of a control signal used to instruct activation/deactivation is not configured in particular to a cell to be activated/deactivated.

The base station does not notify the UE of the information related to the control signal used to instruct activation/deactivation of the given cell. In this case, the UE may assume that activation/deactivation of the given cell is instructed by at least one of the MAC control element and the DCI.

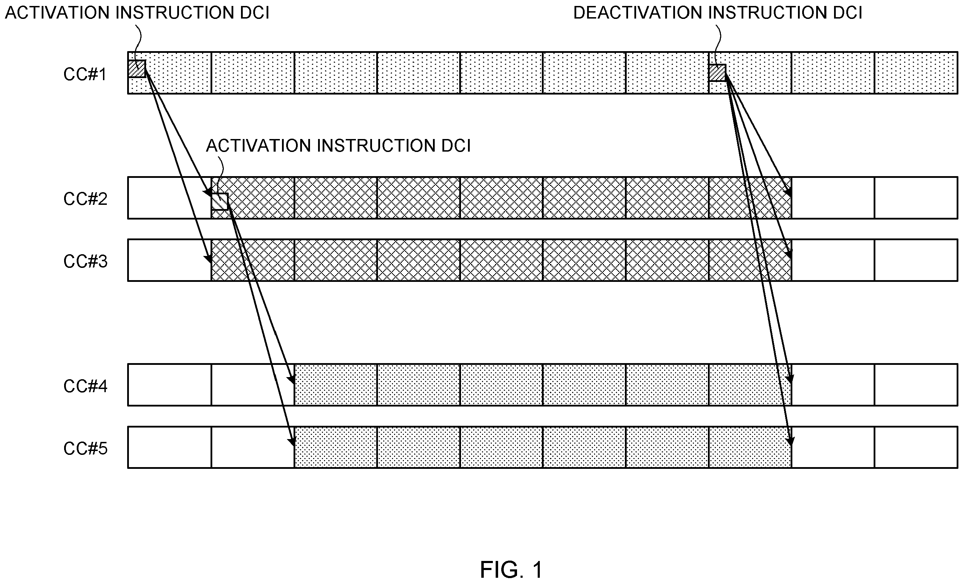

Fig. 1 illustrates one example of a case where activation/deactivation of each cell is instructed by using the DCI. Fig. 1 illustrates a case where a CC #1 to a CC #5 are configured to the UE. However, the number of CCs configured to the UE, and CC indices are not limited to these. In addition, Fig. 1 is usable in the option 1 (e.g., a case where the DCI is configured as the control signal to the CC #2 to the CC #5), the option 2 or the option 3.

Fig. 1 illustrates a case where DCI for instructing activation of the CC #2 and the CC #3 is transmitted by the CC #1, and DCI for instructing activation of the CC #4 and the CC #5 is transmitted by the CC #2. Furthermore, Fig. 1 illustrates a case where DCI for instructing deactivation for the CC #2, the CC #3, the CC #4 and the CC #5 is transmitted by the CC #1. DCI for activation/deactivation is transmitted by using a downlink control channel (e.g., PDCCH) of a CC in an active state. In addition, the MAC control element for activation/deactivation is transmitted by using a downlink shared channel (e.g., PDSCH) of a CC in an active state.

The base station notifies the UE of that a CC that monitors DCI for activation of the CC #2 and the CC #3 is the CC #1 by using, for example, a higher layer. Furthermore, the base station notifies the UE of that a CC that monitors DCI for activation of the CC #4 and the CC #5 is the CC #2 by using, for example, the higher layer. Furthermore, the base station notifies the UE of that a CC that monitors DCI for deactivation of the CC #2 to the CC #5 is the CC #2 by using, for example, the higher layer.

The UE controls reception processing (e.g., monitoring) of DCI for activation/deactivation of each CC based on information notified from the base station. In Fig. 1, the UE only needs to monitor the DCI for activation/deactivation in the CC #1 and the CC #2 (in a case of an active state). On the other hand, the UE may be configured not to monitor the DCI for activation/deactivation in the CC #3 to the CC #5.

Thus by configuring a CC that transmits DCI for instructing activation/deactivation of each CC, it is possible to reduce a load of reception processing of the UE, and appropriately control activation/deactivation of each CC.

Fig. 1 illustrates a case where DCI for instructing activation/deactivation of each CC is transmitted by another CC. However, the present embodiment is not limited to this. For example, there may be employed a configuration where DCI for instructing activation of the CC #4 and the CC #5 is instructed by DCI transmitted not only by the CC #2 but also by the CC #1 (or the CC #3). Furthermore, there may be employed a configuration DCI for instructing deactivation of the CC #4 and the CC #5 is instructed by DCI transmitted not only by the CC #1 but also by the CC #2 or the CC #3.

Thus, by employing a configuration where the DCI for instructing activation/deactivation of each CC is transmitted by a plurality of CCs, it is possible to flexibly control the instruction of activation/deactivation. Furthermore, it is possible to prevent the DCI for instructing activation/deactivation from locally concentrating on a given CC.

Alternatively, there may be employed a configuration where a CC that transmits DCI for instructing activation of another CC (or a CC in which the UE monitors the DCI for instructing activation of the another CC) is not deactivated. Furthermore, there may be configured a configuration where a CC that transmits DCI for instructing deactivation of another CC (or a CC in which the UE monitors the DCI for instructing deactivation of the another CC) is not deactivated.

For example, there may be employed a configuration where the CC #1 in Fig. 1 is not activated/deactivated by DCI of another CC (e.g., a primary cell, a PSCell or a PUCCH SCell). In this case, there may be employed a configuration where at least activation/deactivation of the other CC #2 to CC #5 can be instructed by using the CC #1. Consequently, it is possible to appropriately activate/deactivate the other CCs by using DCI transmitted by the CC #1.

Alternatively, there may be employed a configuration where at least one of activation and deactivation of a CC to which DCI for instructing activation/deactivation of another CC is transmitted is not instructed by the another DCI transmitted by the another CC.

For example, in Fig. 1, activation of the CC #4 and the CC #5 is controlled by DCI for activation/deactivation transmitted by the CC #2 (or the CC #3). In this case, the UE may assume that activation and deactivation of the CC #2 (or the CC #3) that monitors DCI for activation/deactivation is not instructed by DCI transmitted by another CC.

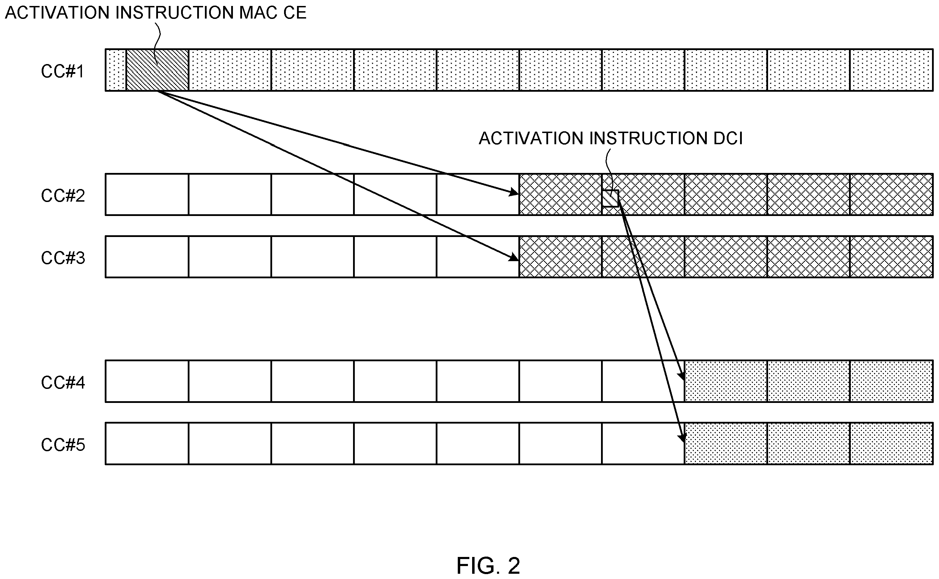

In this case, there may be employed a configuration where the CC #2 (or the CC #3) is activated/deactivated by using at least one of the MAC control element and the timer (see Fig. 2). Fig. 2 illustrates a case where the CC #2 and the CC #3 are not activated/deactivated not by using the DCI but by using the MAC control element. In this case, the MAC control element only needs to be configured for activation/deactivation of the CC #2 (or the CC #3) (above option 1).

Thus, by configuring the control signal for instructing activation/deactivation of each cell to notify the UE, it is possible to appropriately control activation/deactivation even when a plurality of control signals are used.

### (Second Aspect)

According to the second aspect, in a case (option 1) where activation/deactivation of a given cell is controlled by using only one of a first control signal (e.g., MAC control element) and a second control signal (e.g., DCI), timer control is also applied in combination. In addition, the following description will describe the case (option 1) where activation/deactivation of the given cell is controlled by using only one of the DCI and the MAC control element. However, the control of activation/deactivation of the given cell may be used as appropriate in a case (option 2) where both of the DCI and the MAC control element are configured, too.

### <When DCI is Configured>

When the DCI is configured as a control signal for activation/deactivation of the given cell, a timer (deactivation timer) that controls deactivation of the given cell is controlled as follows.

### [Start Timing/Restart Timing]

When receiving DCI for instructing activation of the given cell, the UE starts the deactivation timer from a timing at which the DCI is received. When, for example, receiving the DCI for instructing deactivation in a given slot, the UE starts the deactivation timer from the given slot (e.g., a start position of the given slot), and activates the given cell. A timing to activate the given cell may be the same as that of a slot in which the timer is started, or may be a slot (e.g., a next or subsequent slot) different from the slot in which the timer is started.

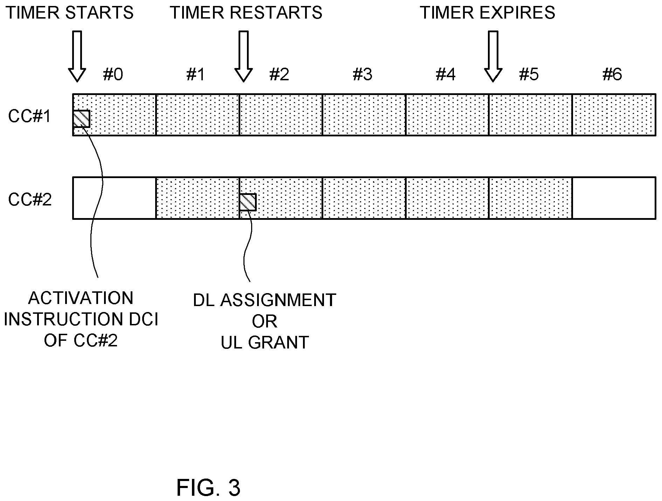

Fig. 3 illustrates a case where DCI for instructing activation/deactivation of the CC #2 is transmitted by the CC #1. The UE monitors the DCI for activation/deactivation in the CC #1, and controls activation/deactivation of the CC #2 based on reception of the DCI.

Fig. 3 illustrates a case where the DCI for instructing activation of the CC #2 is transmitted in a slot #0. The UE that has received the DCI performs control to activate the CC #2 from a slot #1, and starts the deactivation timer of the CC #2 in the slot #0.

Furthermore, when the deactivation timer for the given cell is activating at a point of time at which the DCI for activation of the given cell is received, the UE may restart (or reactivate) the deactivation timer.

Alternatively, when a DL assignment or a UL transmission instruction (e.g., UL grant) in the CC is instructed by a downlink control channel (e.g., PDCCH) associated with the CC in an active state, the UE may restart the deactivation timer of the CC. The PDCCH associated with the CC in the active state may be a PDCCH that is transmitted by the CC, or may be a PDCCH that is transmitted by another CC (serving cell) that controls scheduling (cross-carrier scheduling) of the CC.

Fig. 3 illustrates a case where the deactivation timer of the CC #2 is started in the slot #0, and DCI for the DL assignment or the UL transmission instruction is transmitted by the CC #2 on the PDCCH of the CC #2 in the active state. In this case, the UE may restart (or reactivate) the deactivation timer of the CC #2.

In addition, a reception timing of the DCI for instructing activation/deactivation may not be used, but a timing to transmit a transmission acknowledgement signal (Acknowledgement or ACK) for the DCI for instructing activation/deactivation may be used as a start timing/restart timing. Once the UE receives the DCI for instructing activation/deactivation, the UE transmits the transmission acknowledgement signal (Acknowledgement or ACK) for the DCI at a given timing, and, at the same time, restarts the deactivation timer of the CC at a timing at which the transmission acknowledgement signal (Acknowledgement or ACK) is transmitted and ends activation a given time (e.g., 1 slot) after the timing at which the transmission acknowledgement signal (Acknowledgement or ACK) is transmitted. By determining the restart timing of activation or the timer based on the timing of the transmission acknowledgement signal (Acknowledgement or ACK), it is possible to realize more reliable recognition between a base station and a terminal.

### [Stop Timing]

When receiving DCI for instructing deactivation of the given cell, the UE stops the deactivation timer based on reception of the DCI. When, for example, receiving DCI for instructing deactivation in a given slot, the UE stops the deactivation timer in the given slot, and deactivates the given cell. A timing to deactivate the given cell may be the same as that of a slot in which the timer is stopped, or may be a slot (e.g., a next or subsequent slots) different from the slot in which the timer is stopped.

Furthermore, when the deactivation timer expires after the given duration passes since the deactivation timer is started (or restarted), the UE may stop the timer. Fig. 3 illustrates a case where the deactivation timer of the CC #2 expires in a slot #5 and the UE deactivates the CC #2 from a slot #6.

In this regard, a timing to stop the deactivation timer and/or end deactivation may be specified based on the timing at which a transmission acknowledgement signal (Acknowledgement or ACK) for DCI for instructing deactivation of the given cell has been transmitted. By determining the timing of deactivation based on the timing of the transmission acknowledgement signal (Acknowledgement or ACK), it is possible to realize more reliable recognition between the base station and the terminal.

### [Non-Application of Timer]

Alternatively, there may be employed a configuration where, when activation/deactivation of a cell that uses DCI is configured, the deactivation timer is not configured or configured to infinite. When, for example, DCI-based activation/deactivation is configured to the given cell, the UE may assume that the given cell is not deactivated based on the deactivation timer.

In this case, there may be employed a configuration where an instruction of deactivation of the given cell is made by giving notification of DCI (or the DCI or the MAC control element) without using the timer. Consequently, the UE does not need to perform a deactivation operation using the timer, so that it is possible to simplify the deactivation operation of the UE.

### <When MAC Control Element is Configured>

When the MAC control element is configured as the control signal for activation/deactivation of the given cell, the timer (deactivation timer) that controls deactivation of the given cell is controlled as follows.

### [Start Timing/Restart Timing]

When receiving the MAC control element for instructing activation of the given cell, the UE starts the deactivation timer from a timing at which the MAC control element is received. When, for example, receiving the MAC control element for instructing activation in a given slot, the UE starts the deactivation timer from the given slot (e.g., a start position of the given slot), and activates the given cell after a given duration from the given slot.

Furthermore, when the deactivation timer of the given cell is activating at a point of time at which the MAC control element for activation of the given cell is received, the UE may restart (or reactivate) the deactivation timer.

Alternatively, when a DL assignment or a UL transmission instruction (e.g., UL grant) in the CC is instructed by a downlink control channel (e.g., PDCCH) associated of the CC in an activate state, the UE may restart the deactivation timer of the CC. The PDCCH associated with the CC in the active state may be a PDCCH that is transmitted by the CC, or may be a PDCCH that is transmitted by another CC (serving cell) that controls scheduling (cross-carrier scheduling) of the CC.

Furthermore, when an MAC PDU is transmitted by the UL grant or is received by the DL assignment, the deactivation timer may be restarted.

### [Stop Timing]

When receiving the MAC control element for instructing deactivation of the given cell, the UE stops the deactivation timer based on reception of the MAC control element. When, for example, receiving the MAC control element for instructing deactivation in a given slot, the UE stops the deactivation timer in the given slot, and deactivates the given cell after a given duration from the given slot.

Furthermore, when the deactivation timer expires after the given duration passes since the deactivation timer is started (or restarted), the UE may stop the timer.

Thus, by applying the instruction of activation/deactivation that uses the control signal, and deactivation that uses the timer in combination, it is possible to flexibly control activation/deactivation of the cell.

### (Third Aspect)

The third aspect will describe a case (option 2) where activation/deactivation of a given cell is controlled by using both of a first control signal (e.g., MAC control element) and a second control signal (e.g., DCI).

When both of DCI-based and MAC-based activation/deactivation are configured to the given cell, the UE controls activation/deactivation of the given cell based on notification that uses the DCI or notification that uses the MAC control element.

On the other hand, when two types of the control signals are used to give notification of activation/deactivation, there is also supposed a case where items of instruction contents of the two types of the control signals duplicate (or contend). In this case, how to control activation/deactivation of a cell matters. The third aspect will describe an operation (e.g., UE operation) for solving this problem below.

### <Contention Case>

The case where items of the instruction contents of the two types of the control signals duplicate (or contend) includes a case (case 0) where the MAC control element and the DCI for instructing activation/deactivation are transmitted in the same transmission duration (e.g., slot).

Furthermore, there is also a case where a certain duration is necessary by a timing (also referred to as an effective time) at which a cell is actually activated/deactivated after a control signal for instructing activation/deactivation is received. In this case, there is also supposed, for example, a case where another control signal is received between a reception timing of a certain control signal and the effective time associated with the control signal. In this case, it is supposed that the instruction contents of the DCI and the instruction contents of the MAC control element duplicate (or contend).

Thus, following cases 1 to 3 are supposed as cases where the items of instruction contents of activation/deactivation of the given cell duplicate (or contend). One example of each case and a UE operation in each case will be described below.

### [Case 1]

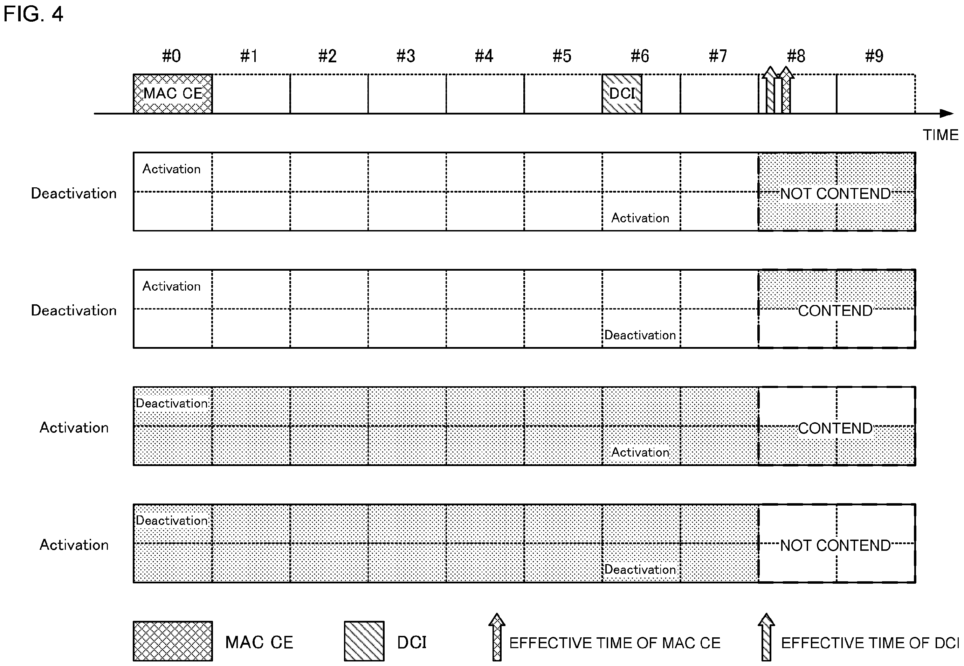

There is supposed a case where the UE receives the MAC control element earlier than the DCI, yet the effective time of activation/deactivation of a cell instructed by the MAC control element is the same as an effective time of activation/deactivation of the cell instructed by the DCI (see Fig. 4). The effective time of activation/deactivation refers to a time (e.g., timing) at which the UE that has received a control signal actually executes activation/deactivation.

Fig. 4 illustrates a case where the UE receives the MAC control element for instructing activation/deactivation of the given cell in a given transmission duration (e.g., slot #0), and receives the DCI for instructing activation/deactivation of the given cell in a slot #6. Furthermore, Fig. 4 illustrates a case where the effective time of the MAC control element and the effective time of the DCI are a same slot #8.

The UE performs an activation/deactivation operation instructed by the MAC control element and an activation/deactivation operation instructed by the DCI in the slot #8.

In this case, when contents notified by the MAC control element and contents notified by the DCI are the same, the items of instruction contents do not contend. When, for example, the contents notified by the MAC control element indicates activation, and the contents notified by the DCI indicates activation for a given cell in a deactivated state, the given cell is activated. Furthermore, when the contents notified by the MAC control element indicates deactivation, and the contents notified by the DCI indicates deactivation for the given cell in an active state, the given cell is deactivated.

On the other hand, when the contents notified by the MAC control element and the contents notified by the DCI are different, the items of instruction contents contend. When, for example, the contents notified by the MAC control element indicates activation, and the contents notified by the DCI indicates deactivation for a given cell in a deactivated state, whether to activate or deactivate the given cell matters. Furthermore, when the contents notified by the MAC control element indicates deactivation, and the contents notified by the DCI indicates activation for a given cell in an active state, whether to activate or deactivate the given cell matters.

### [Case 2]

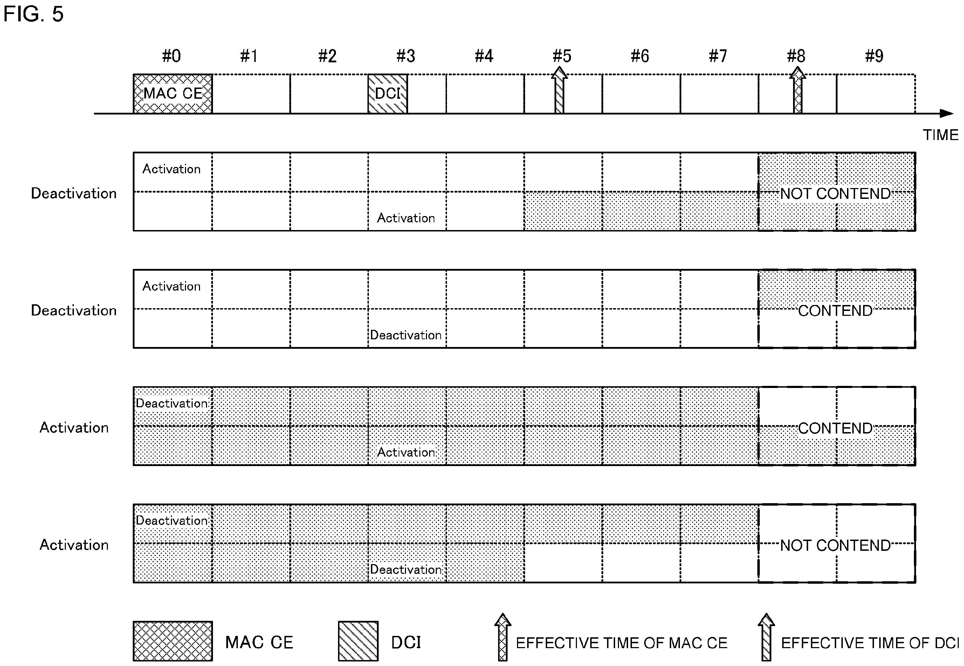

There is supposed a case where the UE receives the MAC control element earlier than the DCI, yet an effective time of activation/deactivation of a cell instructed by the MAC control element comes later than an effective time of activation/deactivation of the cell instructed by the DCI (see Fig. 5).

Fig. 5 illustrates a case where the UE receives the MAC control element for instructing activation/deactivation of the given cell in the slot #0, and receives the DCI for instructing activation/deactivation of the given cell in a slot #3. Furthermore, Fig. 5 illustrates a case where an effective time of the MAC control element is the slot #8, and an effective time of the DCI is a slot #5.

The UE performs an activation/deactivation operation instructed by the DCI in the slot #5, and performs an activation/deactivation operation instructed by the MAC control element in the slot #8.

In this case, when contents notified by the MAC control element and contents notified by the DCI are the same, the items of instruction contents do not contend. When, for example, the contents notified by the MAC control element indicates activation, and the contents notified by the DCI indicates activation for a given cell in a deactivated state, the given cell is activated in each of the slots #5 and #8. Furthermore, when the contents notified by the MAC control element indicates deactivation, and the contents notified by the DCI indicates deactivation for a given cell in an active state, the given cell is deactivated in each of the slots #5 and #8.

On the other hand, when the contents notified by the MAC control element and the contents notified by the DCI are different, the items of instruction contents contend. For example, a case is assumed where the contents notified by the MAC control element indicates activation, and the contents notified by the DCI indicates deactivation for a given cell in a deactivated state. In this case, the UE deactivates the given cell in the slot #5 and activates the given cell in the slot #8, and therefore the items of instruction contents contend.

Furthermore, a case is assumed where the contents notified by the MAC control element indicates deactivation, and the contents notified by the DCI indicates activation for a given cell in an active state. In this case, the UE activates the given cell in the slot #5 and deactivates the given cell in the slot #8, and therefore the items of instruction contents contend.

### [Case 3]

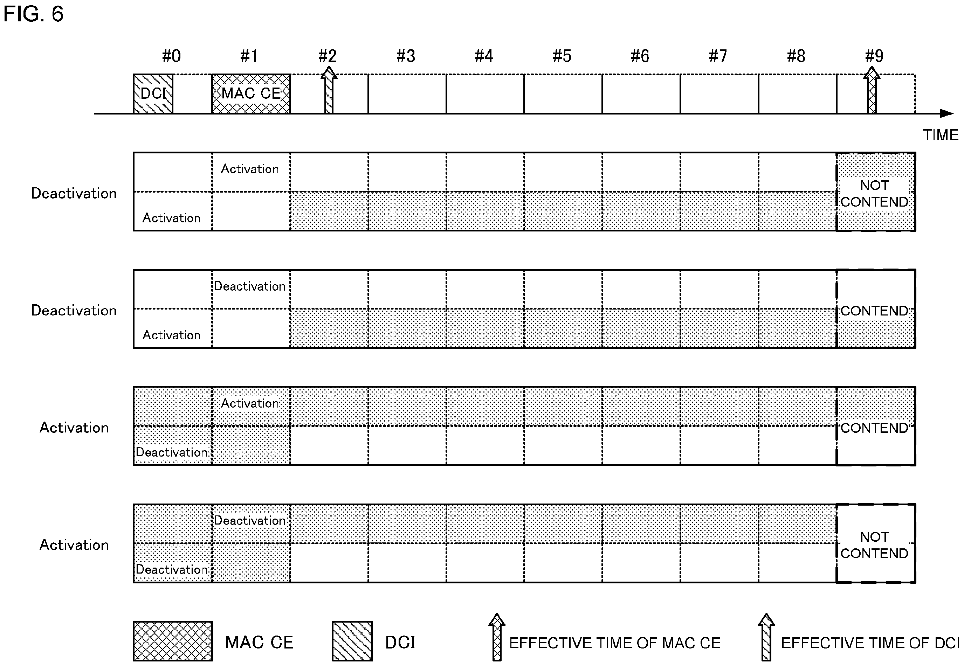

There is supposed a case where the UE receives the MAC control element later than the DCI, and an effective time of activation/deactivation of a cell instructed by the MAC control element comes later than an effective time of activation/deactivation of the cell instructed by the DCI (see Fig. 6).

Fig. 6 illustrates a case where the UE receives DCI for instructing activation/deactivation of a given cell in the slot #0, and receives an MAC control element for instructing activation/deactivation of the given slot in a slot #1. Furthermore, Fig. 6 illustrates a case where the effective time of the DCI is the slot #2, and the effective time of the MAC control element is a slot #9.

The UE performs an activation/deactivation operation instructed by the DCI in the slot #2, and performs an activation/deactivation operation instructed by the MAC control element in the slot #9.

In this case, when contents notified by the MAC control element and contents notified by the DCI are the same, the items of instruction contents do not contend. When, for example, the contents notified by the DCI indicates activation, and the contents notified by the MAC control element indicates activation for a given cell in a deactivated state, the given cell is activated in each of the slots #2 and #9. Furthermore, when the contents notified by the DCI indicates deactivation, and the contents notified by the MAC control element indicates deactivation for a given cell in an active state, the given cell is deactivated in each of the slots #2 and #9.

On the other hand, when the contents notified by the MAC control element and the contents notified by the DCI are different, the items of instruction contents contend. For example, a case is assumed where the contents notified by the DCI indicates activation, and the contents notified by the MAC control element indicates deactivation for a given cell in a deactivated state. In this case, the UE activates the given cell in the slot #2 and deactivates the given cell in the slot #9, and therefore the items of instruction contents contend. In this regard, the effective time of the MAC control element transmitted after the DCI comes later than the effective time of the DCI, and therefore it may be supposed that the instruction contents of the DCI is overridden by the instruction contents of the MAC control element.

Furthermore, a case is assumed where the contents notified by the DCI indicates deactivation, and the contents notified by the MAC control element indicates activation for a given cell in an active state. In this case, the UE deactivates the given cell in the slot #2 and activates the given cell in the slot #8, and therefore the items of instruction contents contend. In this regard, the effective time of the MAC control element transmitted after the DCI comes later than the effective time of the DCI, and therefore it may be supposed that the instruction contents of the DCI is overridden by the instruction contents of the MAC control element.

Thus, when the items of instruction contents of the MAC control element and the DCI are different, which one of activation and deactivation to perform matters. Alternatively, even when the items of instruction contents of the MAC control element and the DCI are the same, how to control a timing to apply activation/deactivation matters.

Hence, the UE may perform following operations (an option 0, an option 1-1 to an option 1-6 and an option 2) in the above cases 0 to 3.

### <Option 0>

The UE may assume that the DCI and the MAC control element for instructing activation/deactivation of a given cell are not received concurrently (e.g., in the same slot) in the case 0. That is, the UE performs control assuming that the DCI and the MAC control element for instructing activation/deactivation of the given cell are not concurrently transmitted.

In this case, a network (e.g., base station) side only needs to perform control such that the DCI and the MAC control element for instructing activation/deactivation of the given cell are not transmitted concurrently (e.g., in the same slot or the same symbol). Consequently, the UE can appropriately control activation/deactivation of the given cell based on the DCI or the MAC control element for instructing activation/deactivation transmitted from the base station.

Furthermore, the UE may assume that the DCI and the MAC control element whose items of instruction contents of activation/deactivation of the given cell contend are not received (or are not transmitted) as described in the case 1 to the case 3.

A case (at least one of the above cases 1 to 3) where the UE receives the DCI and the MAC control element whose items of instruction contents of activation/deactivation of the given cell contend may be decided as an error case. That is, when an instruction of the DCI and an instruction of the MAC control element for instructing activation/deactivation of the given cell duplicate, the UE performs control not to perform an activation/deactivation operation on the given cell.

In addition, the UE may apply the option 0 only in a case where the instruction contents of the DCI and the instruction contents of the MAC control element are different in the case 0 and the cases 1 to 3 (Figs. 4 to 6). Alternatively, not only in the case where the instruction contents of the DCI and the instruction contents of the MAC control element are different in the case 0 and the cases 1 to 3 (Figs. 4 to 6), but also in a case where the items of instruction contents are the same, the UE may apply the option 0. That is, when another control signal is received from a reception timing of a certain control signal to an effective time associated with the control signal, the option 0 may be applied. The same applies to a following option 1-1 to option 1-6 and option 2, too.

### <Option 1>

The UE assumes a case (e.g., at least one of the cases 0 to 3) where the DCI and the MAC control element whose items of instruction contents of activation/deactivation of the given cell contend are received. That is, the UE permits (supports) a case where the DCI and the MAC control element for instructing activation/deactivation of the given cell are concurrently transmitted, or a case where the items of instruction contents duplicate. In these cases, the UE takes at least one of the following options 1-1 to 1-6 and the option 2.

### <Option 1-1>

The UE is configured to follow instruction contents of the MAC control element when receiving the DCI and the MAC control element whose items of instruction contents of activation/deactivation of the given cell contend (or duplicate). Consequently, it is possible to prioritize a method for performing activation/deactivation by control that is easier and common to LTE, so that it is possible to simplify activation/deactivation control.

Furthermore, when the items of instruction contents of the DCI and the MAC control element are the same, activation or deactivation only needs to be controlled according to an effective time of the MAC control element.

### <Option 1-2>

The UE is configured to follow instruction contents of the DCI when receiving the DCI and the MAC control element whose items of instruction contents of activation/deactivation of the given cell contend. Consequently, it is possible to instruct the UE to activate/deactivate the given cell based on the DCI that can be more dynamically controlled than the MAC control element, so that it is possible to activate/deactivate the given cell based on the latest instruction contents in the case 1 and the case 2. Furthermore, by prioritizing the instruction of the DCI for which decoding processing can be performed in a shorter time than the MAC control element, it is possible to control activation/deactivation of the given cell at a high speed.

Furthermore, when the items of instruction contents of the DCI and the MAC control element are the same, activation/deactivation only needs to be controlled according to an effective time of the DCI.

### <Option 1-3>

The UE is configured to follow instruction contents of a subsequently received control signal (received latest control signal) when receiving the DCI and the MAC control element whose items of instruction contents of activation/deactivation of a given cell contend. Consequently, it is possible to activate/deactivate the given cell based on the latest instruction contents instructed by the base station.

Furthermore, when the items of instruction contents of the DCI and the MAC control element are the same, activation or deactivation only needs to be controlled according to an effective time of the subsequently received control signal.

### <Option 1-4>

The UE is configured to follow instruction contents of a control signal of a late effective time when receiving the DCI and the MAC control element whose items of instruction contents of activation/deactivation of a given cell contend. Consequently, it is possible to avoid that activation/deactivation frequently switches in environment in which a contention case frequently occurs, and, as a result, suppress power consumption of the UE.

Furthermore, when the items of instruction contents of the DCI and the MAC control element are the same, activation or deactivation only needs to be controlled according to the control signal of the late effective time.

### <Option 1-5>

The UE activates a given cell by prioritizing instruction contents (activation) when receiving the DCI and the MAC control element whose items of instruction contents of activation/deactivation of the given cell contend.

When, for example, the UE receives the DCI and the MAC control element whose items of instruction contents contend, and when the DCI instructs activation and the MAC control element instructs deactivation, the UE prioritizes the instruction contents of the DCI. Furthermore, when the UE receives the DCI and the MAC control element whose items of instruction contents contend, and when the DCI instructs deactivation and the MAC control element instructs activation, the UE prioritizes the instruction contents of the MAC control element.

Consequently, it is possible to reduce a probability that the given cell is unnecessarily deactivated, and avoid that a throughput lowers.

### <Option 1-6>

The UE deactivates a given cell by prioritizing instruction contents (deactivation) when receiving the DCI and the MAC control element whose items of instruction contents of activation/deactivation of the given cell contend.

When, for example, the UE receives the DCI and the MAC control element whose items of instruction contents contend, and when the DCI instructs activation and the MAC control element instructs deactivation, the UE prioritizes the instruction contents of the MAC control element. Furthermore, when the UE receives the DCI and the MAC control element whose items of instruction contents contend, and when the DCI instructs deactivation and the MAC control element instructs activation, the UE prioritizes the instruction contents of the DCI.

Consequently, it is possible to reduce a probability that the given cell is unnecessarily activated, and avoid an increase in power consumption.

### <Option 2>

The UE autonomously determines an instruction of which one of control signals to follow when receiving the DCI and the MAC control element whose items of instruction contents of activation/deactivation of a given cell contend.

The base station may decide contents selected by the UE based on whether or not a UL signal is received using the given cell. That is, the base station performs reception processing (e.g., decoding processing) that assumes both of UL signals (e.g., a CSI reporting or SRS transmission) in a case where it is assumed that the UE has activated the given cell and a case where it is assumed that the UE has deactivated the given cell, and decides the contents selected by the UE based on a result of the reception processing.

Thus, even when the instructions of two types of control signals duplicate (or contend), it is possible to appropriately activate/deactivate the given cell by performing a UE operation based on a given condition.

### (Modified Example 1)

The above third aspect has described the example of the DCI and the MAC control element as the contention cases of items of instruction contents of activation/deactivation of a given cell. However, the present embodiment is not limited to this. When, for example, activation/deactivation of a cell is instructed by using the DCI, a case is also assumed where an effective time is configured differently per DCI.

In this case, there is also supposed, for example, a case where another DCI is received from a reception timing of certain DCI to an effective time associated with the DCI. In such a case, it is supposed that items of instruction contents of a plurality of pieces of DCI duplicate (or contend).

There are supposed a following case 1' to case 3' as cases where a plurality of pieces of DCI (e.g., first DCI and second DCI) whose items of instruction contents of activation/deactivation of the given cell contend (or duplicate).

### [Case 1']

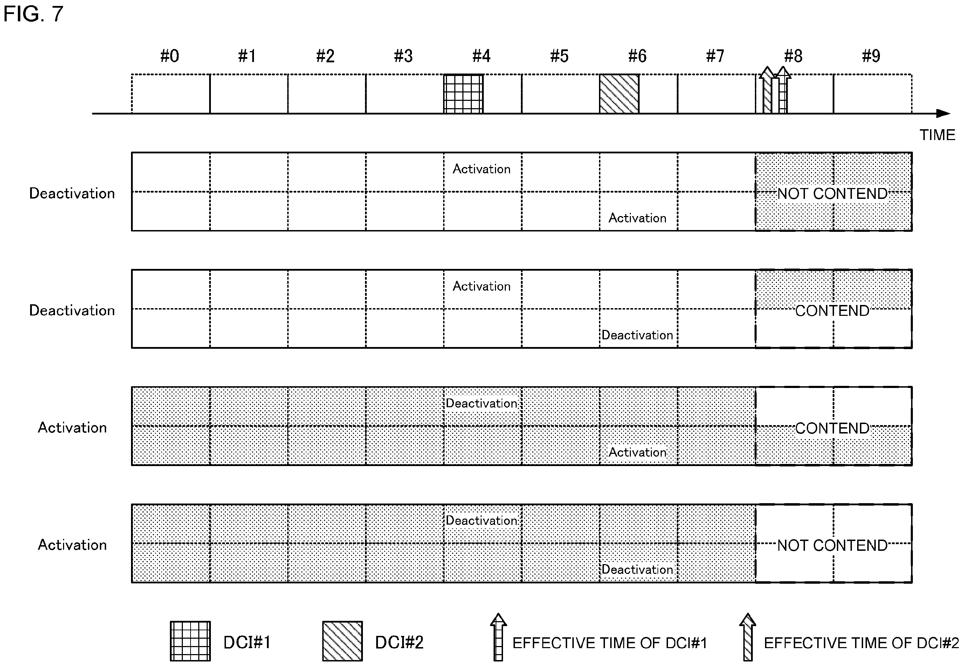

There is supposed a case where the UE receives the first DCI (DCI #1) earlier than the second DCI (DCI #2), yet an effective time of activation/deactivation of a cell instructed by the first DCI is the same as an effective time of activation/deactivation of a cell instructed by the second DCI (see Fig. 7).

Fig. 7 illustrates a case where the UE receives the first DCI for instructing activation/deactivation of the given cell in a given transmission duration (a slot #4 in this case), and receives the second DCI for instructing activation/deactivation of the given cell in the slot #6. Furthermore, Fig. 7 illustrates a case where an effective time of the first DCI and an effective time of the second DCI are the same slot #8.

The UE performs an activation/deactivation operation instructed by the first DCI, and an activation/deactivation operation instructed by the second DCI in the slot #8.

In this case, when contents notified by the first DCI and contents notified by the second DCI are the same, the items of instruction contents do not contend. When, for example, the contents notified by the first DCI indicates activation, and the contents notified by the second DCI indicates activation for a given cell in a deactivated state, the given cell is activated. Furthermore, when the contents notified by the first DCI indicates deactivation, and the contents notified by the second DCI indicates deactivation for a given cell in an active state, the given cell is deactivated.

On the other hand, when the contents notified by the first DCI and the contents notified by the second DCI are different, the items of instruction contents contend. When, for example, the contents notified by the first DCI indicates activation, and the contents notified by the second DCI indicates deactivation for a given cell in a deactivated state, whether to activate or deactivate the given cell matters. Furthermore, when the contents notified by the first DCI indicates deactivation, and the contents notified by the second DCI indicates activation for a given cell in an active state, whether to activate or deactivate the given cell matters.

### [Case 2']

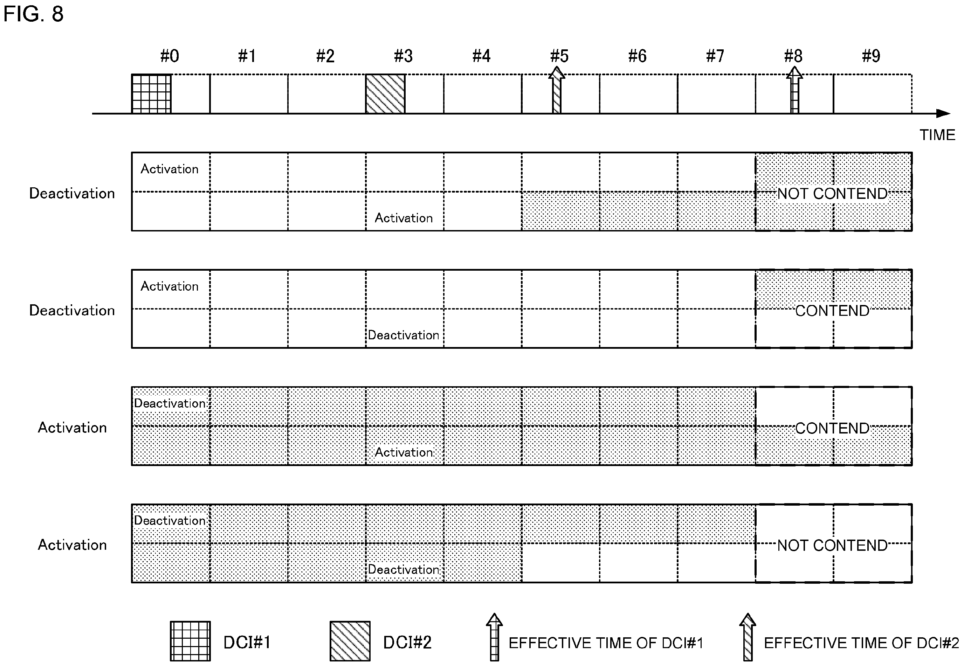

There is supposed a case where the UE receives the first DCI earlier than the second DCI, yet the effective time of activation/deactivation of a cell instructed by the first DCI comes later than the effective time of activation/deactivation of a cell instructed by the second DCI (see Fig. 8).

Fig. 8 illustrates a case where the UE receives the first DCI for instructing activation/deactivation of the given cell in the slot #0, and receives the second DCI for instructing activation/deactivation of the given cell in the slot #3. Furthermore, Fig. 8 illustrates a case where the effective time of the first DCI is the slot #8 and the effective time of the second DCI is the slot #5.

The UE performs an activation/deactivation operation instructed by the second DCI in the slot #5, and an activation/deactivation operation instructed by the first DCI in the slot #8.

In this case, when the contents notified by the first DCI and the contents notified by the second DCI are the same, the items of instruction contents do not contend. When, for example, the contents notified by the first DCI indicates activation, and the contents notified by the second DCI indicates activation for a given cell in a deactivated state, the given cell is activated in each of the slots #5 and #8. Furthermore, when the contents notified by the first DCI indicates deactivation, and the contents notified by the second DCI indicates deactivation for a given cell in an active state, the given cell is deactivated in each of the slots #5 and #8.

On the other hand, when the contents notified by the first DCI and the contents notified by the second DCI are different, the items of instruction contents contend. For example, a case is assumed where the contents notified by the first DCI indicates activation, and the contents notified by the second DCI indicates deactivation for a given cell in a deactivated state. In this case, the UE deactivates the given cell in the slot #5 and activates the given cell in the slot #8, and therefore the items of instruction contents contend.

Furthermore, a case is assumed where the contents notified by the first DCI indicates deactivation, and the contents notified by the second DCI indicates activation for a given cell in an active state. In this case, the UE activates the given cell in the slot #5 and deactivates the given cell in the slot #8, and therefore the items of instruction contents contend.

### [Case 3']

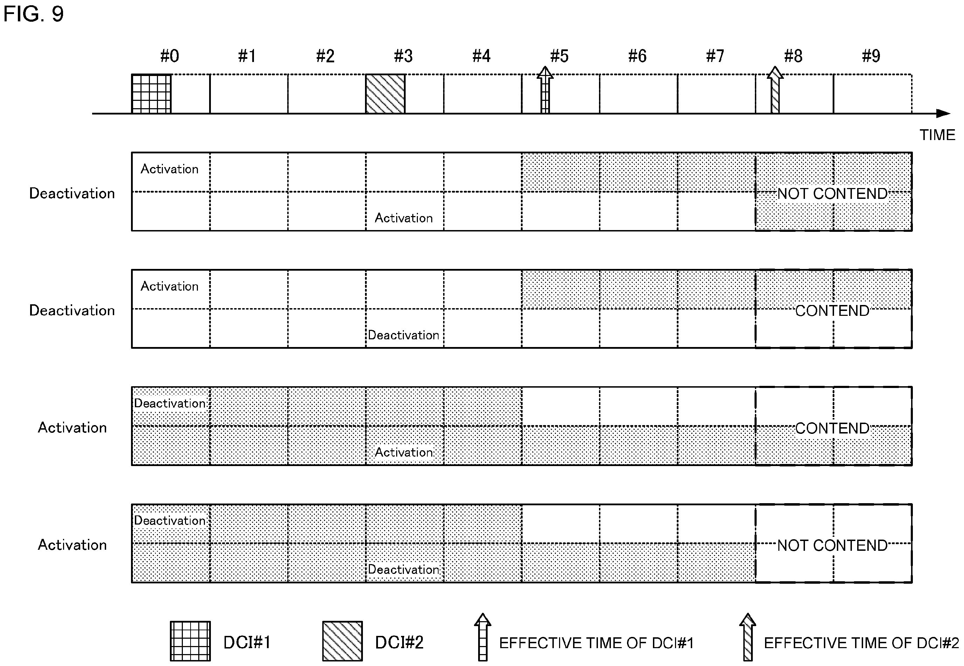

There is supposed a case where the UE receives the first DCI earlier than the second DCI, yet the effective time of activation/deactivation of a cell instructed by the first DCI comes earlier than the effective time of activation/deactivation of a cell instructed by the second DCI (see Fig. 9).

Fig. 9 illustrates a case where the UE receives the first DCI for instructing activation/deactivation of the given cell in the slot #0, and receives the second DCI for instructing activation/deactivation of the given cell in the slot #3. Furthermore, Fig. 9 illustrates a case where the effective time of the first DCI is the slot #5 and the effective time of the second DCI is the slot #8.

The UE performs an activation/deactivation operation instructed by the first DCI in the slot #5, and an activation/deactivation operation instructed by the second DCI in the slot #8.

In this case, when the contents notified by the first DCI and the contents notified by the second DCI are the same, the items of instruction contents do not contend. When, for example, the contents notified by the first DCI indicates activation, and the contents notified by the second DCI indicates activation for a given cell in a deactivated state, the given cell is activated in each of the slots #5 and #8. Furthermore, when the contents notified by the first DCI indicates deactivation, and the contents notified by the second DCI indicates deactivation for a given cell in an active state, the given cell is deactivated in each of the slots #5 and #8.

On the other hand, when the contents notified by the first DCI and the contents notified by the second DCI are different, the items of instruction contents contend. For example, a case is assumed where the contents notified by the first DCI indicates activation, and the contents notified by the second DCI indicates deactivation for a given cell in a deactivated state. In this case, the UE activates the given cell in the slot #5 and deactivates the given cell in the slot #8, and therefore the items of instruction contents contend. In this regard, the effective time of the second DCI transmitted after the first DCI comes later than the effective time of the first DCI. Therefore, it may be supposed that the instruction contents of the first DCI is overridden by the instruction contents of the second DCI.

Furthermore, a case is assumed where the contents notified by the first DCI indicates deactivation, and the contents notified by the second DCI indicates activation for a given cell in an active state. In this case, the UE deactivates the given cell in the slot #5 and activates the given cell in the slot #8, and therefore the items of instruction contents contend. In this regard, the effective time of the second DCI transmitted after the first DCI comes later than the effective time of the first DCI. Therefore, it may be supposed that the instruction contents of the first DCI is overridden by the instruction contents of the second DCI.

Thus, when items of instruction contents of a plurality of pieces of DCI are different, which one of activation and deactivation to perform matters. Alternatively, when items of instruction contents of a plurality of pieces of DCI are the same, how to control a timing to apply activation/deactivation matters.

The UE may apply to the above case 1' to case 3' at least one of the option 0, the option 1-3 to the option 1-6 and the option 2 according to the third aspect. Consequently, even when the instructions of pieces of DCI duplicate (or contend), it is possible to appropriately activate/deactivate the given cell by performing a UE operation based on a given condition.

### (Modified Example 2)

A cell (or a CC) is configured to the UE by using a higher layer (e.g., RRC signaling). In legacy LTE systems (Rel. 13 and prior releases), when a base station configures a cell (e.g., SCell) by using a higher layer signaling, the SCell is configured in a deactivated state. That is, when performing communication using the SCell configured by the higher layer, the UE needs to activate the SCell.

Hence, the present embodiment introduces a higher layer parameter (e.g., sCellState) that configures the SCell in an active state to the UE. That is, the SCell configured to the UE by the higher layer parameter can be used in the active state at the same time when the SCell is configured. Consequently, it is possible to omit an operation of activating the SCell after the SCell is configured by the higher layer, so that it is possible to improve a throughput.

Alternatively, the higher layer parameter that configures the SCell in the active state to the UE, and a parameter that configures the SCell in the deactivated state to the UE may be defined. The base station configures to the UE the SCell in the active state that is immediately used to communicate with the UE configures other SCells in the deactivated state. Consequently, it is possible to flexibly configure the SCell in the active state and the SCell in the deactivated state according to a communication situation.

### (Radio Communication System)

The configuration of the radio communication system according to the present embodiment will be described below. This radio communication system uses at least one combination of a plurality of the above aspects to perform communication.

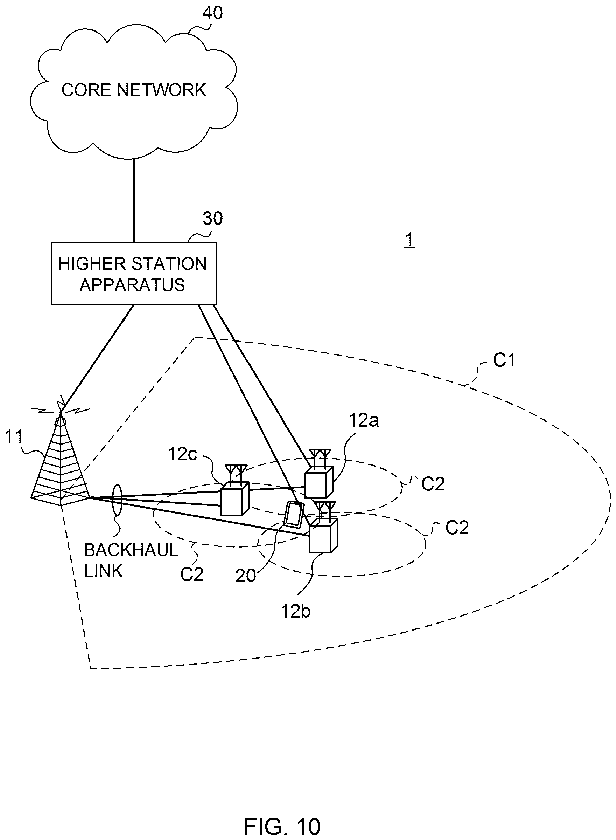

Fig. 10 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 10.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, filtering processing and windowing processing.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Radio Base Station>

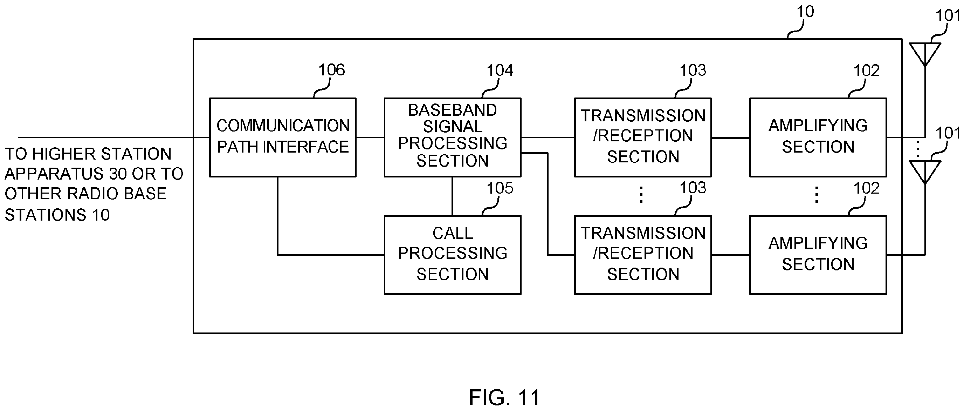

Fig. 11 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present disclosure. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs call processing (such as configuration and release) of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmission/reception section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can be composed of an array antenna, for example. Furthermore, each transmission/reception section 103 is configured to be able to apply single BF and multiple BF.

Each transmission/reception section 103 may transmit a signal by using a transmission beam, or may receive a signal by using a reception beam. Each transmission/reception section 103 may transmit and/or receive a signal by using a given beam determined by a control section 301.

Furthermore, each transmission/reception section 103 transmits a Downlink (DL) signal (including at least one of a DL data signal (downlink shared channel), a DL control signal (downlink control channel) and a DL reference signal) to the user terminal 20, and receives an Uplink (UL) signal (including at least one of a UL data signal, a UL control signal and a UL reference signal) from the user terminal 20.

Furthermore, each transmission/reception section 103 transmits a first control signal and a second control signal for instructing activation or deactivation of a cell. Furthermore, each transmission/reception section 103 may transmit information related to a type of a control signal used to instruct activation or deactivation of a given cell. For example, each transmission/reception section 103 may transmit at least one of information related to a cell whose activation and deactivation are controlled based on the first control signal, and information related to a cell whose activation and deactivation are controlled based on the second control signal.

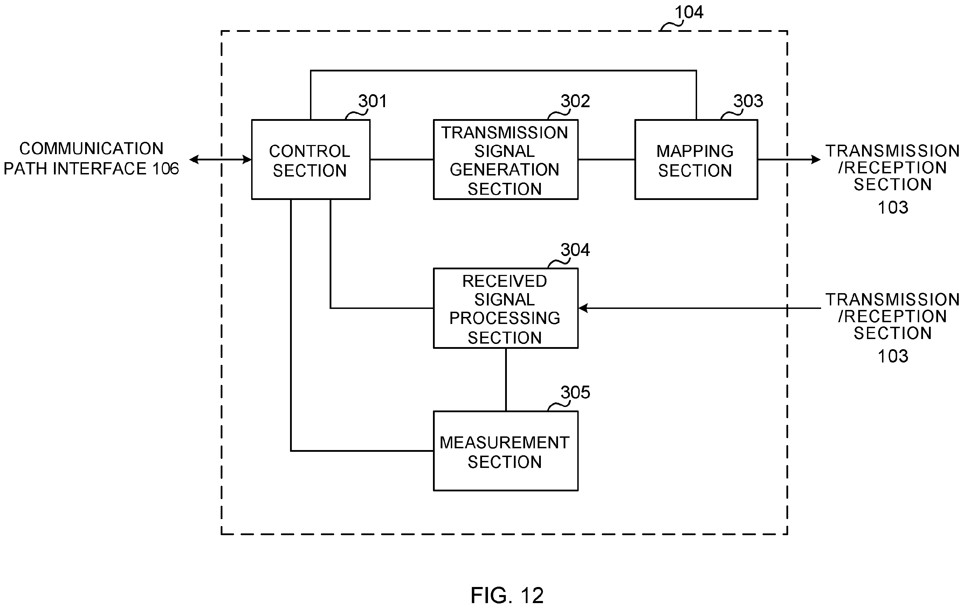

Fig. 12 is a diagram illustrating one example of a function configuration of the radio base station according to the present embodiment. In addition, this example mainly illustrates function blocks of characteristic portions according to the present embodiment, and may assume that the radio base station 10 includes other function blocks, too, that are necessary for radio communication.

The baseband signal processing section 104 includes at least the control section (scheduler) 301, a transmission signal generation section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generation section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 performs control to instruct activation or deactivation of the given cell by using only one of the first control signal and the second control signal or both of the first control signal and the second control signal.

Furthermore, when instructing activation or deactivation of the given cell, the control section 301 may perform control not to transmit the first control signal and the second control signal in the same time domain (e.g., a slot or a symbol). Furthermore, when the first control signal is configured for activation or deactivation of the given cell, the control section 301 may perform control not to use the second control signal to instruct activation or deactivation of the given cell. Alternatively, when the second control signal is configured for activation or deactivation of the given cell, the control section 301 may control not to use the first control signal to instruct activation or deactivation of the given cell.

The transmission signal generation section 302 generates a downlink signal (such as a downlink control signal, a downlink data signal or a downlink reference signal) based on an instruction from the control section 301, and outputs the downlink signal to the mapping section 303. The transmission signal generation section 302 can be composed of a signal generator, a signal generating circuit or a signal generating apparatus described based on the common knowledge in the technical field according to the present disclosure.

The transmission signal generation section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generation section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generation section 302, on given radio resources based on the instruction from the control section 301, and outputs the downlink signal to each transmission/reception section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### <User Terminal>

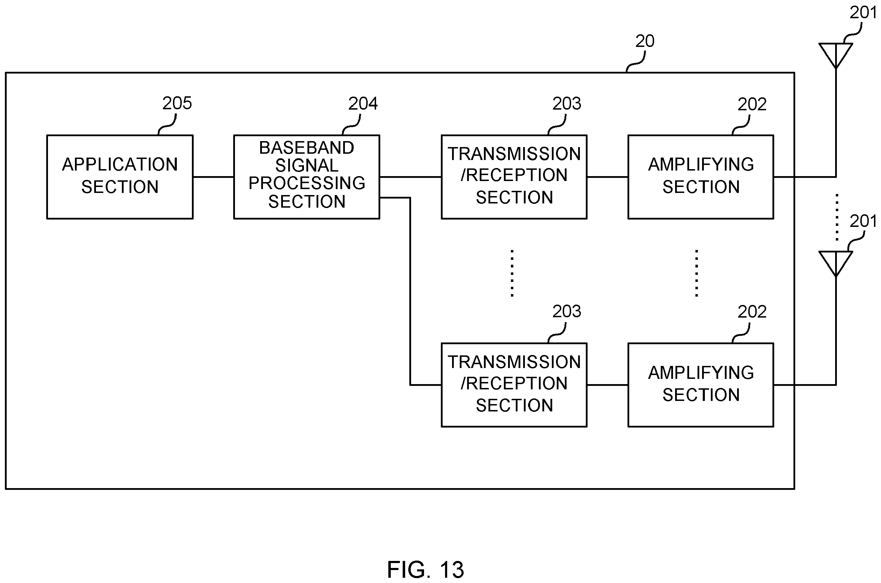

Fig. 13 is a diagram illustrating one example of an overall configuration of the user terminal according to the present embodiment. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present disclosure. In this regard, the transmission/reception sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmission/reception section 203.

Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

In addition, each transmission/reception section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can be composed of an array antenna, for example. Furthermore, each transmission/reception section 203 is configured to be able to apply single BF and multiple BF.

Each transmission/reception section 203 may transmit a signal by using a transmission beam, or may receive a signal by using a reception beam. Each transmission/reception section 203 may transmit and/or receive a signal by using a given beam determined by a control section 401.

Furthermore, each transmission/reception section 203 receives the Downlink (DL) signal (including at least one of the DL data signal (downlink shared channel), the DL control signal (downlink control channel) and the DL reference signal) from the radio base station 10, and transmits the Uplink (UL) signal (including at least one of the UL data signal, the UL control signal and the UL reference signal) to the radio base station 10.

Furthermore, each transmission/reception section 203 receives the first control signal and the second control signal for instructing activation or deactivation of a cell. Furthermore, each transmission/reception section 203 may receive the information related to the type of the control signal used to instruct activation or deactivation of the given cell. For example, each transmission/reception section 203 may receive at least one of the information related to the cell whose activation and deactivation are controlled based on the first control signal, and the information related to the cell whose activation and deactivation are controlled based on the second control signal.

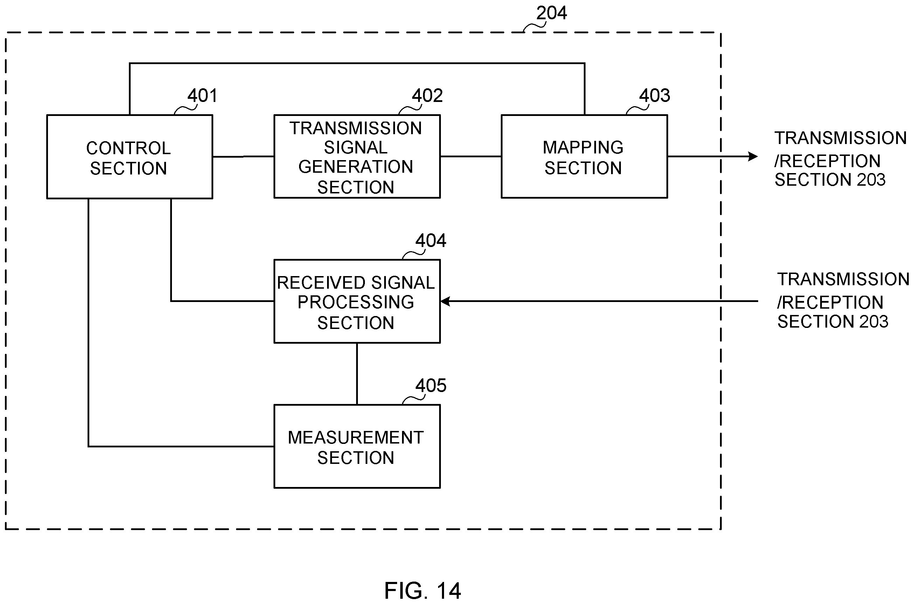

Fig. 14 is a diagram illustrating one example of a function configuration of the user terminal according to the present embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least the control section 401, a transmission signal generation section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generation section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 performs control to activate or deactivate the given cell by using only one of the first control signal and the second control signal or both of the first control signal and the second control signal.

Furthermore, the control section 401 may control a deactivation timer for the given cell based on at least one of reception of the second control signal for instructing activation or deactivation of the given cell, and reception of scheduling information for the given cell.

Furthermore, when the instruction of activation and deactivation of the given cell is controlled by the second control signal, the control section 401 may perform control not to deactivate the given cell using the deactivation timer.

Furthermore, the control section 401 may control activation/deactivation assuming that the first control signal and the second control signal for instructing activation or deactivation of the given cell are not concurrently received.

Furthermore, when the first control signal and the second control signal for instructing activation or deactivation of the given cell are concurrently received, the control section 401 may perform control to activate or deactivate the given cell based on the instruction of one of the first and second control signals.

The transmission signal generation section 402 generates an uplink signal (such as an uplink control signal, an uplink data signal or an uplink reference signal) based on an instruction from the control section 401, and outputs the uplink signal to the mapping section 403. The transmission signal generation section 402 can be composed of a signal generator, a signal generating circuit or a signal generating apparatus described based on the common knowledge in the technical field according to the present disclosure.

The transmission signal generation section 402 generates, for example, an uplink control signal related to transmission acknowledgement information and Channel State Information (CSI) based on the instruction from the control section 401. Furthermore, the transmission signal generation section 402 generates an uplink data signal based on the instruction from the control section 401. When, for example, the downlink control signal notified from the radio base station 10 includes a UL grant, the transmission signal generation section 402 is instructed by the control section 401 to generate an uplink data signal.

The mapping section 403 maps the uplink signal generated by the transmission signal generation section 402, on radio resources based on the instruction from the control section 401, and outputs the uplink signal to each transmission/reception section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

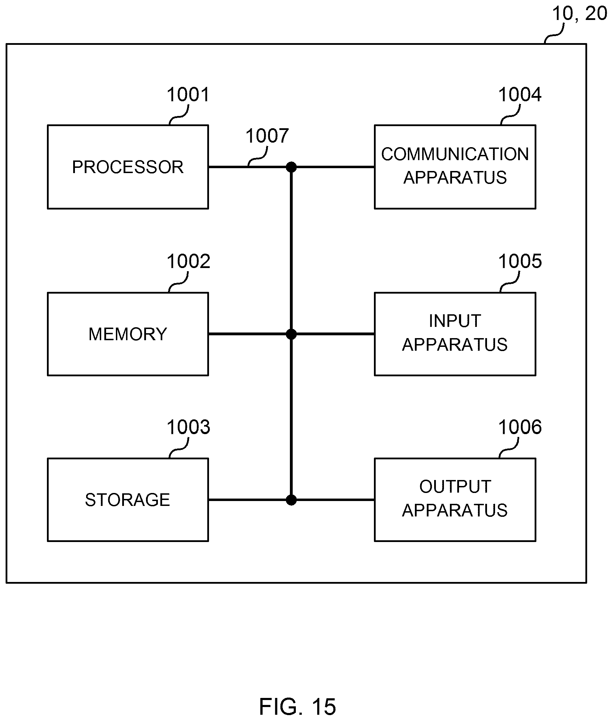

For example, the base station and the user terminal according to the one embodiment of the present disclosure may function as computers that perform processing of the radio communication method according to the present disclosure. Fig. 15 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device, a unit, and so on. The hardware configurations of the base station 10 and the user terminal 20 may be configured to include one or a plurality of apparatuses illustrated in Fig. 15 or may be configured without including part of the apparatuses.

For example, Fig. 15 illustrates the only one processor 1001. However, there may be a plurality of processors. Furthermore, processing may be executed by one processor or processing may be executed by two or more processors concurrently or successively or by using another method. In addition, the processor 1001 may be implemented by one or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache, a main memory (main storage apparatus), and so on. The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM) or the like), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmission/reception sections 103 (203) and communication path interface 106 may be realized by the communication apparatus 1004. Each transmission/reception section 103 may be physically or logically separately implemented as a transmission section 103a and a reception section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier, a carrier frequency, and so on.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols, Single Carrier-Frequency Division Multiple Access (SC-FDMA) symbols, and so on) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, one subframe may be referred to as a Transmission Time Interval (TTI), a plurality of contiguous subframes may be referred to as a TTI, or one slot or one mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when one slot or one mini slot is referred to as a TTI, one or more TTIs (i.e., one or more slots or one or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of one slot, one mini slot, one subframe or one TTI. one TTI or one subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, one RE may be a radio resource domain of one subcarrier and one symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP

The BWP may include a BWP for UL (UL BWP) and a BWP for DL (DL BWP). One or a plurality of BWPs in one carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH), the Physical Downlink Control Channel (PDCCH), and so on) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femto cell or a pico cell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between two or more elements, and can include that one or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using one or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a reception section that receives a first control signal and a second control signal for instructing activation or deactivation of a cell; and
a control section that activates or deactivates a given cell by using only one of the first control signal and the second control signal or both of the first control signal and the second control signal.

2. The user terminal according to claim 1, wherein the reception section receives at least one of information related to a cell whose activation and deactivation are controlled based on the first control signal, and information related to a cell whose activation and deactivation are controlled based on the second control signal.

3. The user terminal according to claim 1 or 2, wherein the control section controls a deactivation timer for the given cell based on at least one of reception of the second control signal for instructing the activation or the deactivation of the given cell, and reception of scheduling information for the given cell.

4. The user terminal according to claim 1 or 2, wherein, when an instruction of the activation and the deactivation of the given cell is controlled by the second control signal, the control section does not deactivate the given cell using a deactivation timer.

5. The user terminal according to any one of claims 1 to 4, wherein the control section assumes that the first control signal and the second control signal for instructing the activation or the deactivation of the given cell are not concurrently received.

6. The user terminal according to any one of claims 1 to 4, wherein, when the first control signal and the second control signal for instructing the activation or the deactivation of the given cell are concurrently received, the control section activates or deactivates the given cell based on the instruction of one of the first and second control signals.
